(19) Europäisches Patentamt / European Patent Office / Office européen des brevets

(11) **EP 3 617 396 A1**

(12) **EUROPEAN PATENT APPLICATION**
published in accordance with Art. 153(4) EPC

(43) Date of publication:
**04.03.2020 Bulletin 2020/10**

(51) Int Cl.:
*D06M 11/56* (2006.01)        *C01F 11/46* (2006.01)
*D21H 17/69* (2006.01)

(21) Application number: **18789822.6**

(22) Date of filing: **17.04.2018**

(86) International application number:
**PCT/JP2018/015893**

(87) International publication number:
**WO 2018/198884 (01.11.2018 Gazette 2018/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **27.04.2017   JP 2017088927
28.04.2017   JP 2017090723**

(71) Applicant: **Nippon Paper Industries Co., Ltd.
Tokyo 114-0002 (JP)**

(72) Inventors:
• **FUKUOKA, Moe
  Tokyo 114-0002 (JP)**
• **GOTO, Shisei
  Tokyo 114-0002 (JP)**

(74) Representative: **Bittner, Thomas L.
Boehmert & Boehmert
Anwaltspartnerschaft mbB
Pettenkoferstrasse 22
80336 München (DE)**

(54) **METHOD FOR PRODUCING INORGANIC PARTICLE COMPOSITE FIBERS**

(57)    A method of producing inorganic-particle-combined fiber includes: a beating step including beating chemical fiber in a wet manner or a dry manner; and a composite fiber forming step including forming inorganic-particle-combined fiber which is composite fiber composed of the chemical fiber and inorganic particles, the composite fiber forming step including synthesizing the inorganic particles in a slurry that contains the chemical fiber after the beating step.

Fig. 3

EP 3 617 396 A1

**Description**

The present invention relates to a method of producing inorganic-particle-combined fiber.

Background

There is an existing technique to impart a desired function to fiber by attaching inorganic particles to the fiber. For example, Patent Literature 1 discloses a method of producing a composite of calcium carbonate particles and fiber by synthesizing calcium carbonate in a fiber-containing solution in the presence of cavitation bubbles.

Citation List

Japanese Patent Application Publication, *Tokukai,* No. 2015-199655 (Publication date: November 12, 2015)

Summary

Technical Problem

Fiber having a greater amount of inorganic matter attached thereto is more useful, because such fiber delivers greater functionality. There is a demand that a greater amount of inorganic matter be attached to, for example, chemical fiber. In view of this, it is an object of an aspect of the present invention to provide a method capable of producing chemical fiber that contains a greater amount of inorganic matter

Solution to Problem

The present invention encompasses, but is not limited to, the following subject matter.

(1) A method of producing inorganic-particle-combined fiber, the method including: a beating step including beating chemical fiber in a wet manner or a dry manner; and a composite fiber forming step including forming inorganic-particle-combined fiber which is composite fiber composed of the chemical fiber and inorganic particles, the composite fiber forming step including synthesizing the inorganic particles in a slurry that contains the chemical fiber after the beating step.

Advantageous Effects of Invention

An aspect of the present invention provides the following effect: it is possible to produce inorganic-particle-combined fiber that contains a greater amount of inorganic particles.

Description of embodiments

Following, further embodiments are described with reference to the figures. In the figures, show

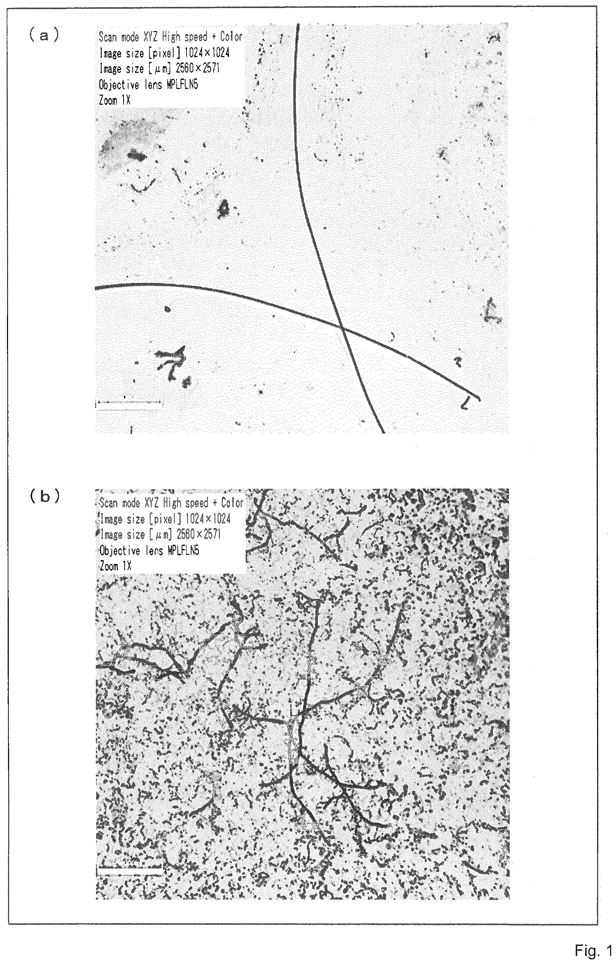

Fig. 1    Micrographs of lyocell (registered trademark) used in Example A-1 observed under a laser microscope. (a) of Fig. 1 shows unbeaten lyocell (registered trademark) observed at a magnification of 100×. (b) of Fig. 1 shows beaten lyocell (registered trademark) observed at a magnification of 100×;

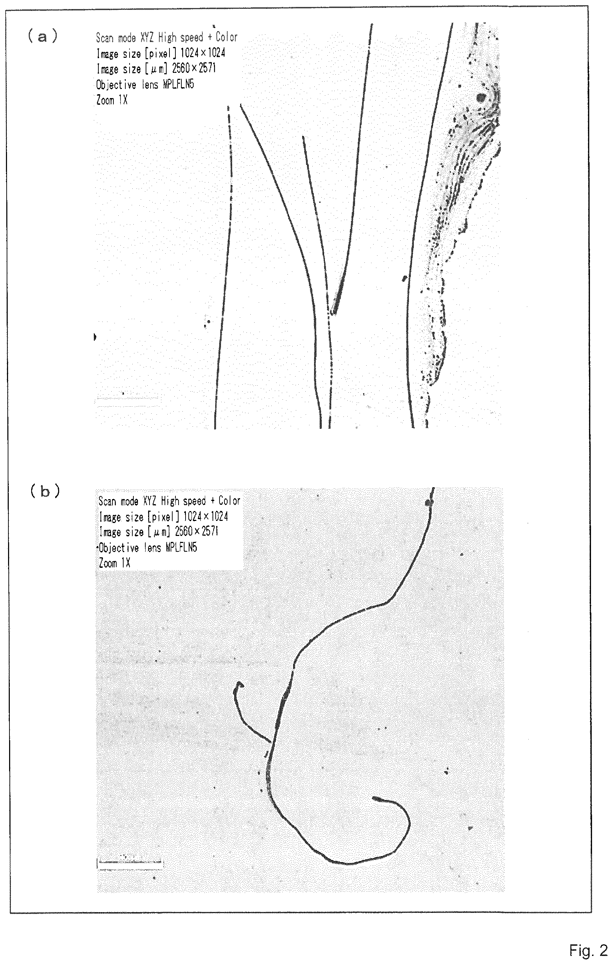

Fig. 2    Micrographs of polyester fiber used in Example A-2 observed under a laser microscope. (a) of Fig. 2 shows unbeaten polyester fiber observed at a magnification of 100×. (b) of Fig. 2 shows beaten polyester fiber observed at a magnification of 100×;

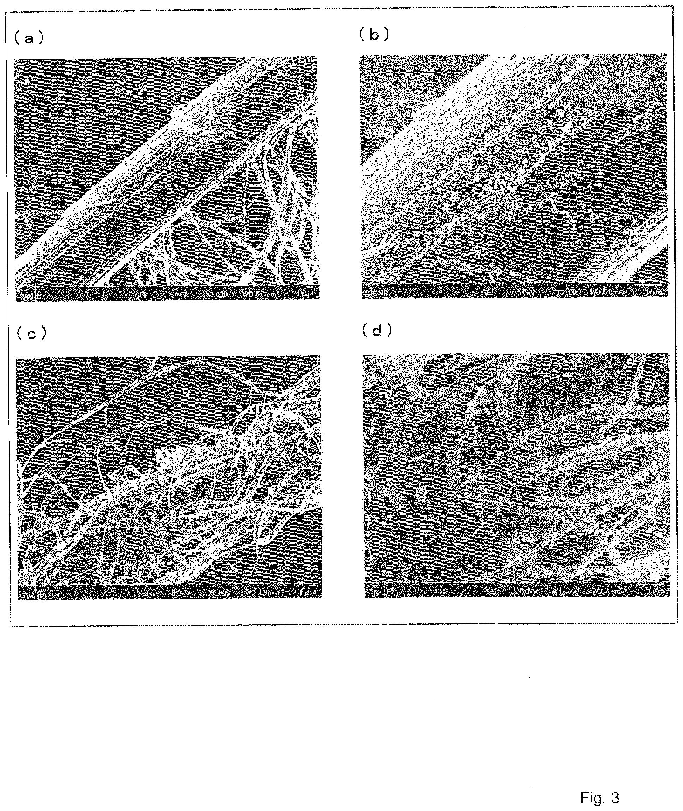

Fig. 3    Micrographs of composite fibers prepared in Example A-1 and Comparative Example A-1 observed under a scanning electron microscope. (a) of Fig. 3 shows the composite fiber of Comparative Example A-1 observed at a magnification of 3000×. (b) of Fig. 3 shows the composite fiber of Comparative Example A-1 observed at a magnification of 10000×. (c) of Fig. 3 shows the composite fiber of Example A-1 observed at a magnification of 3000×. (d) of Fig. 3 shows the composite fiber of Example A-1 observed at a magnification of 10000×.

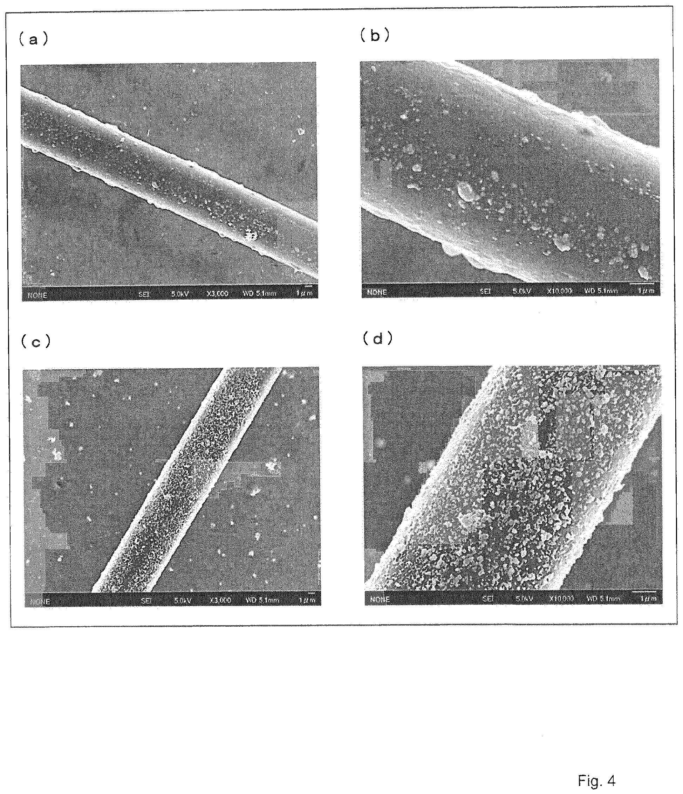

Fig. 4    Micrographs of composite fibers prepared in Example A-2 and Comparative Example A-2 observed under a scanning electron microscope. (a) of Fig. 4 shows the composite fiber of Comparative Example A-2 observed at a magnification of 3000×. (b) of Fig. 4 shows the composite fiber of Comparative Example A-2 observed at a magnification of 10000×. (c) of Fig. 4 shows the composite fiber of Example A-2 observed at a magnification of 3000×. (d) of Fig. 4 shows the composite fiber of Example A-2 observed at a magnification of 10000×;

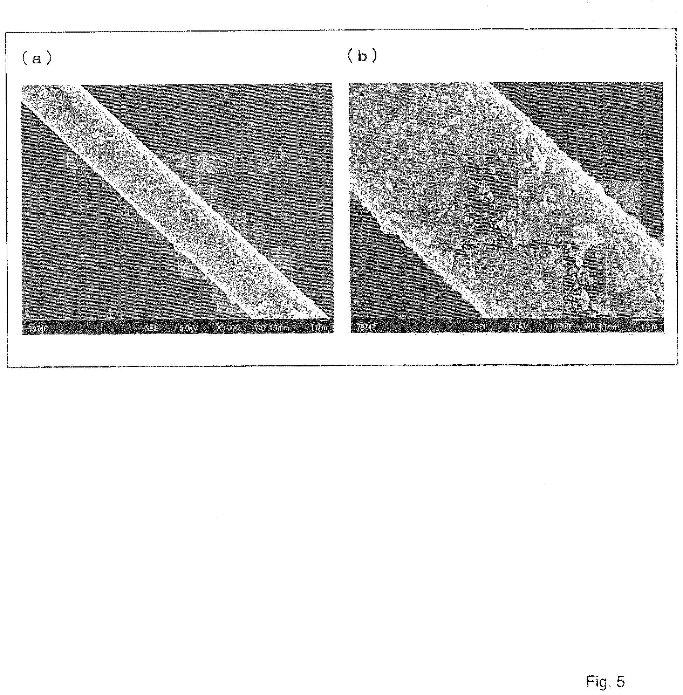

Fig. 5    Micrographs of composite fiber prepared in Example A-3 observed under a scanning electron microscope. (a) of Fig. 5 shows the composite fiber of Example A-3 observed at a magnification of 3000×. (b) of Fig. 5 shows the composite fiber of Example A-3 observed at a magnification of 10000×;

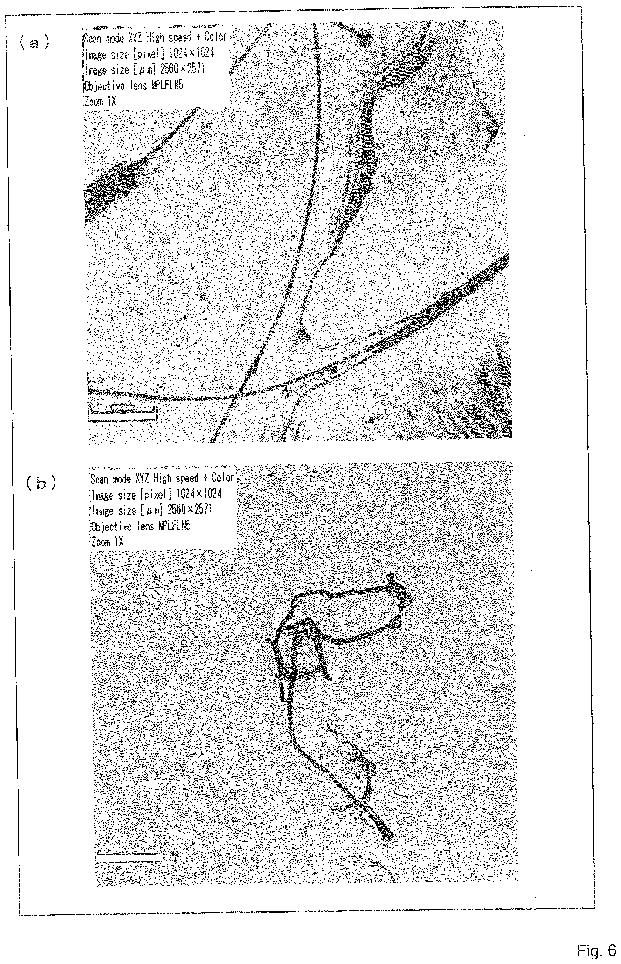

Fig. 6    Micrographs of polypropylene fiber used in Example B-1 observed under a laser microscope. (a) of Fig. 6 shows unbeaten polypropylene fiber observed at a magnification of 100×. (b) of Fig. 6 shows beaten polypropylene fiber observed at a magnification of 100×;

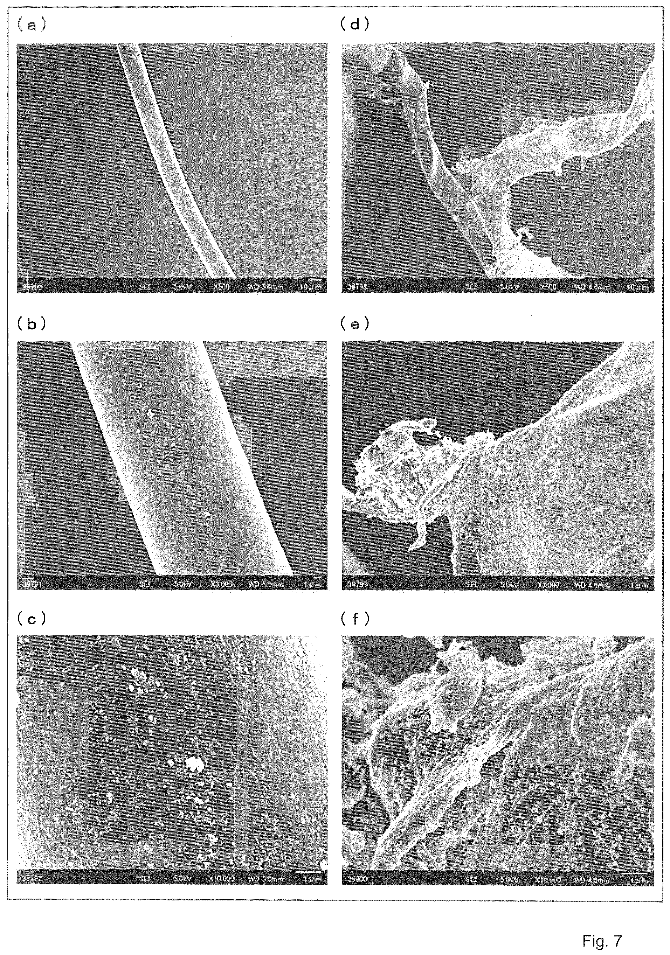

Fig. 7    Micrographs of composite fibers prepared in Example B-1 and Comparative Example B-1 observed under a scanning electron microscope. (a) of Fig. 7 shows the composite fiber of Comparative Example B-1 observed at a magnification of 500×. (b) of Fig. 7 shows the composite fiber of Comparative Example B-1 observed at a magnification of 3000×. (c) of Fig. 7 shows the composite fiber of Comparative Example B-1 observed at a magnification of 10000×. (d) of Fig. 7 shows the composite fiber of Example B-1 observed at a magnification of 500×. (e) of Fig. 7 shows the composite fiber of Example B-1 observed at a magnification of 3000×. (f) of Fig. 7 shows the composite fiber of Example B-1 observed at a magnification of 10000x

Description of Embodiments

The following description will discuss embodiments of the present invention in detail. Note, however, that the present invention is not limited to the embodiments, but can be altered by a skilled person in the art within the scope of the description. In this specification, the phase "*A to B*" indicating a numerical range is intended to mean "not less than *A* and not more than *B*", unless otherwise noted.

<Method of producing inorganic-particle-combined fiber>

A method of producing inorganic-particle-combined fiber in accordance with an aspect of the present invention includes: a beating step including beating chemical fiber in a wet manner or a dry manner; and a composite fiber forming step including forming inorganic-particle-combined fiber which is composite fiber composed of the chemical fiber and inorganic particles, the composite fiber forming step including synthesizing the inorganic particles in a slurry that contains the chemical fiber after the beating step. This arrangement makes it possible to form inorganic-particle-combined fiber composed of inorganic particles and chemical fiber, without having to add a fixing agent. Thus, according to a method of producing inorganic-particle-combined fiber in accordance with an aspect of the present invention, it is possible to effectively impart functions of inorganic particles (e.g., flame resistance, antiodor/antibacterial properties, radiation shielding property, and/or the like) to chemical fiber.
The above arrangement also makes it possible to produce inorganic-particle-combined fiber that contains a greater amount of inorganic particles (i.e., inorganic-particle-combined fiber with higher ash content) than in a case where unbeaten chemical fiber is used to form composite fiber. The inorganic-particle-combined fiber having a greater amount of inorganic particles combined thereto more strongly shows the characteristics derived from the inorganic particles. It is therefore possible to produce inorganic-particle-combined fiber having an enhanced desired function.
The above arrangement also improves the efficiency of combining inorganic particles as compared to the case where unbeaten chemical fiber is used to form composite fiber, and thereby enhances the yield of production of the inorganic-particle-combined fiber. Note that, in this specification, the "inorganic-particle-combined fiber" may be referred to as "composite fiber" for short.
The chemical fiber may either be polar chemical fiber or nonpolar chemical fiber. A method using polar chemical fiber is discussed in the following <Method A of producing inorganic-particle-combined fiber> section, and a method using nonpolar chemical fiber is discussed in the <Method B of producing inorganic-particle-combined fiber> section provided later.

<Method A of producing inorganic-particle-combined fiber>

A method of producing inorganic-particle-combined fiber in accordance with an aspect of the present invention includes: a beating step including beating polar chemical fiber in a wet manner or a dry manner; and a composite fiber forming step including forming inorganic-particle-combined fiber which is composite fiber composed of the polar chemical fiber and inorganic particles, the composite fiber forming step including synthesizing the inorganic particles in a slurry that contains the polar chemical fiber after the beating step. This arrangement makes it possible to form inorganic-particle-combined fiber composed of inorganic particles and polar chemical fiber, without having to add a fixing agent. Thus, according to a method of producing inorganic-particle-combined fiber in accordance with an aspect of the present invention, it is possible to effectively impart functions of inorganic particles (e.g., flame resistance, anti-odor/antibacterial properties, radiation shielding property, and/or the like) to polar chemical fiber.

The above arrangement also makes it possible to produce inorganic-particle-combined fiber that contains a greater amount of inorganic particles (i.e., inorganic-particle-combined fiber with higher ash content) than in a case where unbeaten polar chemical fiber is used to form composite fiber. The inorganic-particle-combined fiber having a greater amount of inorganic particles combined thereto more strongly shows the characteristics derived from the inorganic particles. It is therefore possible to produce inorganic-particle-combined fiber having an enhanced desired function.

The above arrangement also improves the efficiency of combining inorganic particles as compared to the case where unbeaten polar chemical fiber is used to form composite fiber, and thereby enhances the yield of production of the inorganic-particle-combined fiber.

A method of producing inorganic-particle-combined fiber in accordance with an aspect of the present invention can be used in cases of producing inorganic-particle-combined fibers with various ash contents. The method can be particularly suitably used in a case of producing inorganic-particle-combined fiber with high ash content, which could not have been achieved by conventional methods. For example, it is possible to produce inorganic-particle-combined fiber comprised of polar chemical fiber and having an ash content (% by weight) of not less than 5% by weight, even not less than 10% by weight. Details of a method of calculating the ash content (% by weight) of inorganic-particle-combined fiber will be described later in Examples.

Furthermore, a method of producing inorganic-particle-combined fiber in accordance with an aspect of the present invention can be used in cases of producing inorganic-particle-combined fibers with various rates of coverage. The method can be particularly suitably used in a case of producing inorganic-particle-combined fiber with a high rate of coverage, which could not have been achieved by conventional methods. For example, it is possible to produce inorganic-particle-combined fiber comprised of polar chemical fiber and having a coverage (% by area) of not less than 15% by area, even not less than 20% by area. Note that the coverage (% by area) refers to how much percentage of the fiber surface is covered with inorganic particles (i.e., area percentage). The coverage can be determined by observing the inorganic-particle-combined fiber under an electron microscope.

[A-1. Beating step]

The beating step includes beating polar chemical fiber in a wet manner or a dry manner. The polar chemical fiber will be described later in detail. In the beating step, a process equivalent to beating that is usually carried out on pulp fiber may be carried out on the polar chemical fiber. The polar chemical fiber may be beaten by, for example, mechanically (physically) processing the polar chemical fiber with use of a known beating machine. With regard to the beating machine, a beating machine usually used in beating of pulp fiber can be used also when beating polar chemical fiber. Examples of the beating machine include: Niagara beaters, PFI mills, disk refiners, conical refiners, ball mills, stone mills, sand grinder mills, impact mills, high-pressure homogenizers, low-pressure homogenizers, Dinomill, ultrasonic mills, Kanda grinder, attritors, vibrating mills, cutter mills, jet mills, disintegrators, household juicer mixers, and mortars. Among those listed above, Niagara beaters, disk refiners, and conical refiners can be suitably used.

In the beating step, beating can be carried out in a wet manner or a dry manner. As used herein, the term "wet" refers to a case in which polar chemical fiber in the form of a slurry is subjected to the beating step, whereas the term "dry" refers to a case in which polar chemical fiber not in the form of a slurry is subjected to the beating step. For example, "dry" beating can refer to mechanically (physically) processing, with the use of the foregoing beating machine, polar chemical fiber that is not contained in a liquid. In a case where the beating step is carried out in a "wet" manner, the liquid component of the slurry that is subjected to the beating step is, for example, water. The liquid component may be a liquid other than water or may be a liquid mixture composed of water and some other liquid. Note that, in this specification, the "slurry" is not particularly limited as to its viscosity, solid concentration, and the like, provided that the slurry is a suspension that contains the polar chemical fiber.

With regard to conditions under which the beating step is carried out, usual conditions under which pulp fiber is beaten can be employed also in a case where the polar chemical fiber is beaten. Beating is carried out under the following conditions in a case where the beating is, for example, wet beating. Specifically, beating is carried out on a slurry that has been prepared by adding water to the polar chemical fiber to have a polar chemical fiber concentration of preferably 0.1% by weight to 50% by weight, more preferably 0.5% by weight to 40% by weight, even more preferably 1% by weight to 30% by weight.

Beating may be carried out batchwise or continuously. In a preferred aspect, beating is carried out continuously while a slurry that contains the polar chemical fiber is flowing. This makes it possible to efficiently beat the polar chemical fiber.

When carrying out beating, any of various kinds of assistant may be added. The assistant may either be an organic substance or an inorganic substance, and two or more kinds can be used in combination. Examples of an organic substance include surfactants and softening agents. Examples of an inorganic substance include: beads and balls made of glass, alumina, zirconia, or the like; and minerals such as calcium carbonate and magnesium carbonate. Addition of such an assistant(s) promotes changes in physical properties of the fiber surface and whole fiber, and thus makes it possible to enhance the effects produced by beating.

It is known that, in a case where beating is carried out on pulp fiber, the pulp fiber after the beating is usually different from that before the beating in physical aspects, such as being broken apart, fibrillated, and having a lower freeness. However, what is important in the beating step of a method of the present invention is the act of mechanically processing the polar chemical fiber; therefore, there is no particular importance attached to whether or not the mechanical process causes the foregoing physical differences between the polar chemical fiber before the beating step and the polar chemical fiber after the beating step. That is, the polar chemical fiber after the beating step may have some physical difference from that before the beating step (e.g., the fiber may have difference in shape, may be broken apart, may be fibrillated, and may have lower freeness) or may have no noticeable observable difference from that before the beating step. For example, in Examples (described later), lyocell (registered trademark), which is polar regenerated cellulose fiber, was beaten. Observation of this lyocell (registered trademark) at an electron microscopic level showed that the lyocell (registered trademark) after the beating step is fibrillated. Such a case in which the polar chemical fiber is fibrillated by beating is preferred, because the surface area of the fiber increases and thereby the area where inorganic particles can be combined increases. However, like polyester fiber used in Examples (described later), some kind of polar chemical fiber may not be fibrillated even after beating, and the surface area of the fiber may not differ much between before and after the beating step. Even in such a case, however, surprisingly, a greater amount of inorganic particles was successfully combined to the polyester fiber when the polyester fiber had undergone the beating step, as compared to when the polyester fiber had not undergone the beating step.

In an aspect of the present invention, in a case where fiber that can become fibrillated upon beating (e.g., lyocell [registered trademark]) is selected as the polar chemical fiber, the beating in the beating step may be carried out so that Canadian standard freeness (CSF), measured in accordance with JIS P 8121:1995, falls within a predetermined range. As the fiber becomes more fibrillated due to beating, the fiber decreases in drainability and freeness. The freeness of the polar chemical fiber for use in synthesis of the composite fiber is not particularly limited, and therefore the beating in the beating step may be carried out so that the beaten polar chemical fiber has a lower freeness than unbeaten polar chemical fiber. Note that, in this specification, the term "Canadian standard freeness" or "CSF" means a value measured in accordance with JIS P 8121:1995. The "JIS P 8121:1995" can be read as "JIS P 8121-2:2012".

In a preferred aspect, in the beating step, the polar chemical fiber is beaten so as to have a Canadian standard freeness (CSF) falling within the range of not less than 10 mL and not more than 760 mL. In a preferred aspect, the polar chemical fiber is beaten so as to have a Canadian standard freeness (CSF) falling within the range of not less than 50 mL and not more than 760 mL, preferably not less than 100 mL and not more than 760 mL. By beating the polar chemical fiber so that the polar chemical fiber has a Canadian standard freeness of not more than 760 mL, it is possible to change the shape of the polar chemical fiber. Furthermore, in some cases, beating of the polar chemical fiber not only achieves changes in shape but also increases surface area. By beating the polar chemical fiber so that the polar chemical fiber has a Canadian standard freeness of not less than 10 mL, it is possible to obtain composite fiber having good drainability. Such composite fiber is superior in handleability.

Beating is preferably carried out so that the difference in CSF of the polar chemical fiber between before and after the beating (such a difference is expressed as "ΔCSF" [mL]) falls within a predetermined range, while ensuring that the CSF falls within the foregoing range. The ΔCSF can be represented as a value obtained by subtracting the CSF of polar chemical fiber after the beating step from the CSF of the polar chemical fiber before the beating step. The ΔCSF can be calculated using the following equation (A-1).

$$\Delta CSF \ (mL) = (CSF \ of \ polar \ chemical \ fiber \ before \ beating \ step) - (CSF \ of \ polar \ chemical \ fiber \ after \ beating \ step) \ ... \ (A\text{-}1)$$

In a preferred aspect, in the beating step, the polar chemical fiber is preferably beaten so that the ΔCSF is preferably not less than 5 mL, more preferably not less than 10 mL, even more preferably not less than 15 mL. By beating the polar chemical fiber so that the ΔCSF is not less than 5 mL, it is possible to change the shape of the polar chemical fiber. In some cases, beating of the polar chemical fiber not only achieves changes in shape but also increases surface area.

In some cases, two or more source materials are allowed to react to form inorganic particles in the composite fiber forming step (details of which will be described later). In such cases, the following arrangement may be employed: in the beating step which precedes the composite fiber forming step, the polar chemical fiber is beaten in the presence of at least one of the two or more source materials. This makes it possible to combine more inorganic particles to the fiber. A reason therefor is inferred to be that, when the polar chemical fiber is beaten in the presence of a source material for use in synthesis of inorganic particles, the source material and the polar chemical fiber have more chance to physically contact with each other and, in turn, inorganic particles grow around the source material (serving as nuclei) physically attached to the polar chemical fiber.

A method of beating the polar chemical fiber in the presence of a source material(s) is not particularly limited. In a preferred aspect, for example, the following method can be employed: at least one of the two or more source materials is added to a slurry that contains the polar chemical fiber; and the slurry is subjected to beating.

In a case where at least one of the two or more source materials is added to the slurry that contains the polar chemical fiber, the "at least one of the two or more source materials" can at least include an alkaline source material or an acidic source material. By adding an alkaline source material or an acidic source material to the slurry that is to be subjected to the beating step, it is possible to efficiently beat the polar chemical fiber, and thus possible to efficiently obtain composite fiber composed of inorganic particles and the polar chemical fiber in the subsequent composite fiber forming step. Which of the alkaline and acidic source materials to add as the "at least one of the two or more source materials" can be determined appropriately according to the type of polar chemical fiber, the type of inorganic particles to be synthesized, and the like.

The "alkaline source material" is, for example, barium hydroxide for use in synthesis of barium sulfate. The "acidic source material" is, for example, aluminum sulfate for use in synthesis of barium sulfate. The beating step can be carried out after a certain period of time has passed from the addition of either an alkaline source material or an acidic source material to the slurry that contains the polar chemical fiber. Alternatively, the beating step may be carried out immediately after the addition.

[A-2. Composite fiber forming step]

The composite fiber forming step includes forming composite fiber composed of polar chemical fiber and inorganic particles. In the composite fiber forming step, inorganic particles are synthesized in the slurry that contains the polar chemical fiber after the beating step, and thereby inorganic-particle-combined fiber is formed. In a preferred aspect, the composite fiber forming step includes forming the composite fiber by use of polar chemical fiber that has undergone the beating step to have a Canadian standard freeness of not less than 10 mL and not more than 760 mL.

(Inorganic particles)

The type of inorganic particles to be synthesized in the composite fiber forming step (that is, the type of inorganic particles to be combined to the polar chemical fiber) can be selected appropriately according to the purpose of use. In some cases, inorganic particles are synthesized in a water system in the composite fiber forming step, and the composite fiber is used in a water system. Therefore, the inorganic particles are preferably insoluble or poorly soluble in water.

The term "inorganic particles" is intended to mean particles of an inorganic compound, which is, for example, a metal compound. A metal compound is what is called an "inorganic salt", which is composed of metal cation (e.g., $Na^+$, $Ca^{2+}$, $Mg^{2+}$, $Al^{3+}$, $Ba^{2+}$) and anion (e.g., $O^{2-}$, $OH^-$, $CO_3^{2-}$, $PO_4^{3-}$, $SO_4^{2-}$, $NO_3^-$, $Si_2O_5^{2-}$, $SiO_3^{2-}$, $Cl^-$, $F^-$, $S^{2-}$) which are bound together by an ionic bond. The inorganic particles are, for example, those of a compound that contains at least one selected from the group consisting of gold, calcium, silicic acid, magnesium, barium, aluminum, titanium, copper, silver, zinc, platinum, iron, palladium, and zirconium. More specific examples of inorganic particles include those of: calcium carbonate (light calcium carbonate, heavy calcium carbonate), magnesium carbonate, barium carbonate, aluminum hydroxide, calcium hydroxide, barium sulfate, magnesium hydroxide, zinc hydroxide, calcium phosphate, zinc oxide, zinc stearate, titanium dioxide, some kinds of silica which are produced from a sodium silicate and a mineral acid (white carbon, silica/calcium carbonate composite, silica/titanium dioxide composite), calcium sulfate, zeolite, and hydrotalcite. With regard to calcium carbonate/silica composite, not only a calcium carbonate and/or light calcium carbonate/silica composite but also amorphous silica such as white carbon may be used in combination. The inorganic particles listed above may be used alone or two or more kinds of them may be used in combination, provided that they do not inhibit each other's synthesis reactions in a fiber-containing solution.

In a case where the inorganic particles contained in the composite fiber are of hydrotalcite, it is more preferable that at least one of magnesium and zinc makes up not less than 10% by weight of the ash content of the composite fiber composed of the hydrotalcite and polar chemical fiber.

In an embodiment of the present invention, the inorganic particles can contain at least one compound selected from the group consisting of calcium carbonate, magnesium carbonate, barium sulfate, and hydrotalcite.

(Method of synthesizing inorganic particles)

A method of synthesizing inorganic particles is not particularly limited, and may be a known method. A method of synthesizing inorganic particles may either be a gas-liquid method or a liquid-liquid method. An example of the gas-liquid method is a carbon dioxide process in which, for example, magnesium hydroxide and carbonic acid gas are allowed to react to form magnesium carbonate. A carbon dioxide process in which calcium hydroxide and carbonic acid gas are allowed to react with each other produces calcium carbonate. Calcium carbonate may be synthesized by, for example, a soluble salt reaction method, lime-soda method, or soda method. Magnesium carbonate can alternatively be synthesized by a method by which sodium carbonate or potassium carbonate is added to an aqueous magnesium salt solution. Examples of the liquid-liquid method include: a method in which an acid (such as hydrochloric acid or sulfuric acid) and a base (such as sodium hydroxide or potassium hydroxide) are allowed to react by neutralization; a method in which an inorganic salt is allowed to react with an acid or a base; and a method in which inorganic salts are allowed to react with each other. For example, when barium hydroxide and sulfuric acid are allowed to react with each other, barium sulfate can be obtained. When barium hydroxide and aluminum sulfate (aluminum sulfide) are allowed to react with each other, not only barium sulfate but also an aluminum compound such as aluminum hydroxide can be obtained. When aluminum chloride or aluminum sulfate is allowed to react with sodium hydroxide, aluminum hydroxide can be obtained. When calcium carbonate and aluminum sulfate are allowed to react with each other, inorganic particles which are a composite of calcium and aluminum can be obtained. In synthesizing inorganic particles in this manner, any metal and/or metal compound can coexist in a reaction liquid. In such a case, the metal and/or metal compound can be efficiently incorporated into the inorganic particles to form a composite. For example, assume that calcium phosphate is synthesized by adding phosphoric acid to calcium carbonate. In so doing, if titanium dioxide is allowed to coexist in the reaction liquid, composite particles composed of calcium phosphate and titanium can be obtained.

In a case where two or more kinds of inorganic particles are combined to the polar chemical fiber, the two or more kinds of inorganic particles may be combined to the polar chemical fiber in the following manner: a reaction of synthesizing one kind of inorganic particles is carried out in the presence of the polar chemical fiber; and then this reaction is stopped and another reaction of synthesizing another kind of inorganic particles is carried out. In a case where these reactions do not inhibit each other or in a case where a single reaction achieves the synthesis of a plurality of kinds of target inorganic particles, the two or more kinds of inorganic particles may be synthesized concurrently. Seed crystals can be added before or during the synthetic reactions. The addition of seed crystals promotes growth of inorganic particles, and makes it easy to control the particles to have a desired particle diameter.

The reaction conditions under which the composite fiber forming step is carried out (e.g., temperature of reaction liquid, pH of reaction liquid, electric conductivity of reaction liquid, reaction time) are not particularly limited, and may be selected appropriately according to the type of synthesis reaction of inorganic particles. By carrying out the synthesis reaction of inorganic particles while stirring a reaction liquid, it is possible to improve reaction efficiency. The synthesis reaction of inorganic particles may either be a batchwise reaction or a continuous reaction.

In a preferred aspect, the average primary particle diameter of the inorganic particles in the composite fiber can be, for example, 5 $\mu$m or less. The following inorganic particles can be used: inorganic particles having an average primary particle diameter of 3 $\mu$m or less, inorganic particles having an average primary particle diameter of 1 $\mu$m or less, inorganic particles having an average primary particle diameter of 200 nm or less, inorganic particles having an average primary particle diameter of 100 nm or less, and inorganic particles having an average primary particle diameter of 50 nm or less. The average primary particle diameter of the inorganic particles can be 10 nm or more. Note that the average primary particle diameter can be calculated from an electron micrograph.

It is possible to combine inorganic particles of various sizes and shapes to fiber by adjusting conditions under which the inorganic particles are synthesized. For example, it is possible to obtain composite fiber in which inorganic particles in the form of flakes are combined to fiber. The shapes of the inorganic particles of the composite fiber can be checked by observing under an electron microscope.

Inorganic particles are sometimes in the form of secondary particles which are aggregates of fine primary particles. Inorganic particles may be allowed to form secondary particles that are suited for the purpose of use by an aging process, or the aggregates may be broken into smaller pieces by pulverization. Examples of a method of pulverization include those using a ball mill, a sand grinder mill, an impact mill, a high-pressure homogenizer, a low-pressure homogenizer, Dinomill, an ultrasonic mill, Kanda grinder, an attritor, a stone mill, a vibrating mill, a cutter mill, a jet mill, a disintegrator, a beating machine, a short-screw extruder, a twinscrew extruder, an ultrasonic stirrer, or a household juicer mixer

(Polar chemical fiber)

Chemical fiber is intended to mean any of general fibers produced by a chemical process. Specific examples of the chemical fiber include known synthetic fibers and known regenerated fibers (semi-synthetic fibers). Polar chemical fiber is not particularly limited, provided that the polar chemical fiber has polarity. The polar chemical fiber can be selected appropriately according to the purpose of use. Examples of the polar chemical fiber include: chemical fibers and glass fibers having, in its molecule, a polar group such as hydroxyl group (-OH), carboxyl group (-COOH), amino group (-NH$_2$),

aldehyde group, phosphoric acid group, urea group, sulfo group, nitro group, amide group, cyano group, carbonyl group (-COO-), ether group (-O-), or silanol group; and synthetic fibers whose surface is modified with such functional group (including nonpolar synthetic fibers whose surface is modified with such functional group).

Specific examples of synthetic polar chemical fibers include polyester fiber, polyamide fiber, acrylic fiber, polyurethane fiber, polyvinyl alcohol fiber, and polyvinyl chloride. Examples of semi-synthetic polar chemical fibers include regenerated cellulose fiber and acetate. Examples of polyester fiber include polyethylene terephthalate (PET) fiber, polytrimethylene terephthalate (PTT) fiber, and polybutylene terephthalate (PBT) fiber. Examples of polyamide fiber include nylon fiber and aramid fiber.

In a preferred aspect, the polar chemical fiber is at least one chemical fiber selected from the group consisting of regenerated cellulose fiber, polyester fiber, polyamide fiber, and acrylic fiber. These polar chemical fibers are superior in heat resistance, strength, and the like, and therefore production of composite fiber by imparting functions of inorganic particles to such polar chemical fiber is useful. Examples of regenerated cellulose fiber include lyocell (registered trademark), rayon, and cupra (registered trademark). The degree of polymerization of each cellulose molecule of regenerated cellulose fiber is not particularly limited, and can be selected appropriately according to the purpose of use. Among the regenerated cellulose fibers, lyocell (registered trademark) is particularly superior in strength and therefore can be employed suitably as a material for nonwoven fabric. This means that it would be useful if it is possible to produce high-ash-content composite fiber comprised of lyocell (registered trademark).

The fibers listed above may be used alone or two or more of them may be used in combination.

The fiber length of the polar chemical fiber which is to be used to form the composite fiber is not particularly limited. For example, the polar chemical fiber can have an average fiber length of about 0.1 μm to 15 mm, 1 μm to 12 mm, 100 μm to 10 mm, 500 μm to 8 mm, or the like.

The amount of the polar chemical fiber contained in the slurry for use in the composite fiber forming step (that is, the amount of polar chemical fiber subjected to synthesis of composite fiber) is preferably an amount that allows not less than 15% by area of the surface of the polar chemical fiber to be covered with inorganic particles. For example, it is preferable that the amount of the polar chemical fiber is selected so that the weight ratio between the polar chemical fiber and inorganic particles in the inorganic-particle-combined fiber resulting from the composite fiber forming step is 5/95 to 95/5. The amount may be selected so that the weight ratio is 10/90 to 90/10, 20/80 to 80/20, 30/70 to 70/30, or 40/60 to 60/40.

(Other substances)

In an aspect of the present invention, the slurry in the composite fiber forming step may contain some substance other than the polar chemical fiber, inorganic particles, and source materials for use in synthesis of the inorganic particles. The slurry in the composite fiber forming step can have optionally added thereto any of various kinds of known assistant (e.g., chelating agent, surface treatment agent, dispersing agent or the like, flocculant, coagulant, retention aid, bleaching agent, germicide, sizing agent and/or the like). These assistants may be used alone or two or more of them may be used in combination. There is no particular limitation on when the assistant(s) is/are added to the slurry. The assistant(s) can be added in an amount of preferably 0.001 % by weight to 20% by weight, more preferably 0.01% by weight to 10% by weight, relative to the amount of the inorganic particles.

<Inorganic-particle-combined fiber A>

The scope of the present invention also encompasses inorganic-particle-combined fiber A that is produced by the method A of producing inorganic-particle-combined fiber in accordance with the present invention. Inorganic-particle-combined fiber composed of polar chemical fiber and inorganic particles is not simple fiber in which the polar chemical fiber and inorganic particles are present merely in a mixed manner, but a composite of the polar chemical fiber and inorganic particles which are bonded together by, for example, hydrogen bonds. Therefore, the inorganic particles are less likely to fall off the polar chemical fiber. Such composite fiber is high in yield of inorganic particles and is less prone to powdering off despite its high ash content, and thus is suitable for use in various applications.

The inorganic-particle-combined fiber produced by the method A of producing inorganic-particle-combined fiber in accordance with an aspect of the present invention can be high-ash-content composite fiber comprised of polar chemical fiber, which could not have been achieved by conventional methods. For example, the inorganic-particle-combined fiber A produced in an aspect of the present invention can be inorganic-particle-combined fiber comprised of polar chemical fiber in which the ash content (% by weight) is not less than 5% by weight, even not less than 10% by weight.

Furthermore, the inorganic-particle-combined fiber produced by the method A of producing inorganic-particle-combined fiber in accordance with an aspect of the present invention can be high-coverage composite fiber comprised of polar chemical fiber, which could not have been achieved by conventional methods. For example, the inorganic-particle-combined fiber A produced in an aspect of the present invention can be inorganic-particle-combined fiber comprised of polar chemical fiber in which the extent of covering of fiber surface by inorganic particles (such an extent of covering is referred to as coverage, which is expressed in area percentage) (% by area) is not less than 15% by area, even not less than 20% by area.

Moreover, the inorganic-particle-combined fiber A produced by the method A of producing inorganic-particle-combined fiber in accordance with an aspect of the present invention has a greater proportion of its fiber surface covered with inorganic particles. Such inorganic-particle-combined fiber achieves higher yield when made into a sheet. This in turn makes it possible to improve the speed of sheet production (e.g., wire speed of paper machine).

In a preferred aspect, the inorganic-particle-combined fiber A is composite fiber composed of (i) inorganic particles and (ii) polar chemical fiber that has a Canadian standard freeness (in accordance with JIS P 8121:1995) of not less than 10 mL and not more than 760 mL.

In a preferred aspect, the inorganic-particle-combined fiber A is inorganic-particle-combined fiber comprised of at least one polar chemical fiber selected from the group consisting of regenerated cellulose fiber, polyester fiber, polyamide fiber, and acrylic fiber.

[Applications]

The inorganic-particle-combined fiber A produced by the method A of producing inorganic-particle-combined fiber in accordance with the present invention can be used in various applications. The inorganic-particle-combined fiber A can be used in a wide variety of applications, examples of which include: paper, nonwoven fabric, fiber, cellulosic composite materials, filter materials, paints, plastics and other resins, rubbers, elastomers, ceramics, glasses, tires, building materials (such as asphalt, asbestos, cement, boards, concrete, bricks, tiles, plywood, and fiber boards), various carriers (such as catalytic carriers, pharmaceutical carriers, agrochemical carriers, and microbial carriers), adsorbents (for removing impurities, deodorization, dehumidification and the like), wrinkle-preventing materials, clay, abrasives, modifiers, repairing materials, heat insulating materials, dampproof materials, water-repellent materials, waterproof materials, light shielding materials, sealants, shielding materials, insect repellents, adhesive agents, ink, decorative coatings, medical materials, paste materials, discoloration inhibitors, food additives, tablet excipients, dispersing agents, shape retaining agents, water retaining agents, filtration assistants, essential oil materials, materials for oil disposal, oil modifiers, radiowave absorptive materials, insulators, sound insulating materials, vibration proofing materials, semiconductor sealing materials, radiation-shielding materials, cosmetics, fertilizers, feed, perfumes, additives for paints and adhesive agents, flame retardant materials, hygiene products (such as disposable diapers, sanitary napkins, incontinent pads, breast milk pads, and wet wipe). The inorganic-particle-combined fiber A can also be used in articles such as various kinds of filler and coating materials in the above applications.

The scope of the present invention also encompasses the above articles that include the inorganic-particle-combined fiber A produced by the method A of producing inorganic-particle-combined fiber in accordance with an aspect of the present invention. The scope of the present invention also encompasses use of the inorganic-particle-combined fiber A for production of such an article.

<Method B of producing inorganic-particle-combined fiber>

The following description will discuss a method B of producing inorganic-particle-combined fiber, which is another aspect of the method of producing inorganic-particle-combined fiber. Note that the descriptions in the <Method A of producing inorganic-particle-combined fiber> section are also applied *mutatis mutandis* to the descriptions in the <Method B of producing inorganic-particle-combined fiber> section. In cases where the descriptions in the <Method A of producing inorganic-particle-combined fiber> section are applied *mutatis mutandis* to the descriptions in the <Method B of producing inorganic-particle-combined fiber> section, the terms "polar chemical fiber" shall be read as "nonpolar chemical fiber".

A method of producing inorganic-particle-combined fiber in accordance with an aspect of the present invention includes: a beating step including beating nonpolar chemical fiber in a wet manner or a dry manner; and a composite fiber forming step including forming inorganic-particle-combined fiber which is composite fiber composed of the nonpolar chemical fiber and inorganic particles, the composite fiber forming step including synthesizing the inorganic particles in a slurry that contains the nonpolar chemical fiber after the beating step. This arrangement makes it possible to form inorganic-particle-combined fiber composed of inorganic particles and nonpolar chemical fiber, without having to add a fixing agent. Thus, according to a method of producing inorganic-particle-combined fiber in accordance with an aspect of the present invention, it is possible to effectively impart functions of inorganic particles (e.g., flame resistance, antiodor/antibacterial properties, radiation shielding property, and/or the like) to nonpolar chemical fiber.

The above arrangement also makes it possible to produce inorganic-particle-combined fiber that contains a greater amount of inorganic particles (i.e., inorganic-particle-combined fiber with higher ash content) than in a case where unbeaten nonpolar chemical fiber is used to form composite fiber. The inorganic-particle-combined fiber having a greater amount of inorganic particles combined thereto more strongly shows the characteristics derived from the inorganic particles. It is therefore possible to produce inorganic-particle-combined fiber having an enhanced desired function.

The above arrangement also improves the efficiency of combining inorganic particles as compared to the case where unbeaten nonpolar chemical fiber is used to form composite fiber, and thereby enhances the yield of production of the inorganic-particle-combined fiber.

Note that, with regard to the ash content of inorganic particles and coverage with inorganic particles, the descriptions in the <Method A of producing inorganic-particle-combined fiber> are applied *mutatis mutandis*.

[B-1. Beating step]

The beating step includes beating nonpolar chemical fiber in a wet manner or a dry manner. With regard to conditions under which the beating step is carried out, usual conditions under which pulp fiber is beaten can be employed also in a case where nonpolar chemical fiber is beaten. Beating is carried out in the following conditions in a case of, for example, wet beating. Specifically, beating is carried out on a slurry that has been prepared by adding water to the nonpolar chemical fiber to have a nonpolar chemical fiber concentration of preferably 0.1% by weight to 50% by weight, more preferably 0.3% by weight to 40% by weight, even more preferably 0.5% by weight to 30% by weight.

It is known that, in a case where beating is carried out on pulp fiber, the pulp fiber after the beating is usually different from that before the beating in physical aspects, such as being broken apart, fibrillated, and/or having a lower freeness. However, what is important in the beating step of a method of the present invention is the act of mechanically processing the nonpolar chemical fiber; therefore, there is no particular importance attached to whether or not the mechanical process causes the foregoing physical differences between the nonpolar chemical fiber before the beating step and the nonpolar chemical fiber after the beating step. That is, the nonpolar chemical fiber after the beating step may have some physical difference from that before the beating step (e.g., the fiber may have some difference in shape, may be broken apart, may be fibrillated, and may have lower freeness) or may have no noticeable observable difference from that before the beating step. For example, in Examples (described later), nonpolar polypropylene fiber was beaten. Observation of this nonpolar polypropylene fiber at an electron microscopic level showed that the nonpolar polypropylene fiber after the beating step is bent, is partially delaminated, and has increased surface asperities.

In this way, the beating of the nonpolar chemical fiber is preferred, because the beating causes an increase in surface area of the fiber and thereby increases the area where inorganic particles can be combined.

In an aspect of the present invention, in a case where fiber whose water retention capacity may change upon beating (an example of such fiber is polypropylene fiber) is selected as the nonpolar chemical fiber, the beating in the beating step may be carried out so that Canadian standard freeness (CSF), measured in accordance with JIS P 8121:1995, falls within a predetermined range. As the fiber undergoes changes in shape (e.g., fibrillated) due to beating, the fiber decreases in drainability and freeness. The freeness of the nonpolar chemical fiber for use in synthesis of the composite fiber is not particularly limited, and therefore the beating in the beating step may be carried out so that the beaten nonpolar chemical fiber has a lower freeness than unbeaten polar chemical fiber.

In a preferred aspect, in the beating step, the nonpolar chemical fiber is beaten so as to have a Canadian standard freeness (CSF) falling within the range of not less than 10 mL and not more than 835 mL. In a preferred aspect, the nonpolar chemical fiber is beaten so as to have a Canadian standard freeness (CSF) falling within the range of not less than 50 mL and not more than 835 mL, preferably not less than 100 mL and not more than 800 mL, particularly preferably not less than 150 mL and not more than 800 mL. By beating the nonpolar chemical fiber so that the nonpolar chemical fiber has a Canadian standard freeness of not more than 835 mL, it is possible to change the shape of the nonpolar chemical fiber. Furthermore, in some cases, beating of the nonpolar chemical fiber not only achieves changes in shape but also increases surface area. By beating the nonpolar chemical fiber so that the nonpolar chemical fiber has a Canadian standard freeness of not less than 10 mL, it is possible to obtain composite fiber having good drainability. Such composite fiber is superior in handleability.

Beating is preferably carried out so that the difference in CSF of the nonpolar chemical fiber between before and after the beating (such a difference is expressed as "ΔCSF" (mL)) fails within a predetermined range, while ensuring that the CSF falls within the foregoing range. The ΔCSF can be represented as a value obtained by subtracting the CSF of nonpolar chemical fiber after the beating step from the CSF of the nonpolar chemical fiber before the beating step. The ΔCSF can be calculated using the following equation (B-1).

$$\Delta CSF \text{ (mL)} = \text{(CSF of nonpolar chemical fiber before beating step)} - \text{(CSF of nonpolar chemical fiber after beating step)} \dots \text{(B-1)}$$

In a preferred aspect, in the beating step, the nonpolar chemical fiber is preferably beaten so that the ΔCSF is preferably not less than 5 mL, more preferably not less than 10 mL, even more preferably not less than 15 mL. By beating the nonpolar chemical fiber so that the ∆CSF is not less than 5 mL, it is possible to change the shape of the nonpolar chemical fiber. In some cases, beating of the nonpolar chemical fiber not only achieves changes in shape but also increases surface area.

Note that the descriptions in the <Method A of producing inorganic-particle-combined fiber> section are applied *mutatis mutandis* to the matters other than those described above, specifically, beating method, beating machine, assistants, batchwise beating and continuous beating, and cases where two or more source materials are allowed to react to form inorganic particles in the composite fiber forming step.

[B-2. Composite fiber forming step]

The composite fiber forming step includes forming composite fiber composed of nonpolar chemical fiber and inorganic particles. In the composite fiber forming step, inorganic particles are synthesized in the slurry that contains the nonpolar chemical fiber after the beating step, and thereby inorganic-particle-combined fiber is formed. In a preferred aspect, the composite fiber forming step includes forming the composite fiber by use of nonpolar chemical fiber that has undergone the beating step to have a Canadian standard freeness of not less than 10 mL and not more than 835 mL.

(Nonpolar chemical fiber)

Chemical fiber is intended to mean any of general fibers produced by a chemical process. Specific examples of the chemical fiber include known synthetic fibers and known regenerated fibers (semi-synthetic fibers). Polar chemical fiber is not particularly limited, provided that the nonpolar chemical fiber does not have polarity. The nonpolar chemical fiber can be selected appropriately according to the purpose of use. Examples of the nonpolar chemical fiber include: fibers containing within its molecule no polar groups (such as hydroxyl group [-OH], carboxyl group [-COOH], amino group [$-NH_2$], aldehyde group, phosphoric acid group, urea group, sulfo group, nitro group, amide group, cyano group, carbonyl group [-COO-], ether group [-O-], or silanol group); and synthetic fibers whose surface is modified with nonpolar group such as hydrocarbon (including polar synthetic fibers whose surface is modified with such functional group).

Specifically, the nonpolar chemical fiber is, for example, polyolefin fiber. Examples of the polyolefin fiber include polyethylene fiber and polypropylene fiber. Fibers which are commercially available generally under the name of "polyolefin fiber" can also be suitably used.

In a preferred aspect, the nonpolar chemical fiber is polyolefin fiber, polypropylene fiber, or polyethylene fiber. These nonpolar chemical fibers (especially polypropylene fiber) are lightweight, have superior tensile strength and chemical resistance, and are inexpensive, and therefore can be suitably used as a material for nonwoven fabric. This means that it would be useful if it is possible to produce, for example, high-ash-content composite fiber comprised of polypropylene fiber.

The fibers listed above may be used alone or two or more of them may be used in combination.

Note that the descriptions in the <Method A of producing inorganic-particle-combined fiber> sections are applied *mutatis mutandis* to the matters other than those described above, specifically, inorganic particles, method of synthesizing inorganic particles, fiber length of nonpolar chemical fiber which is to be used to from composite fiber, amount of nonpolar chemical fiber contained in the slurry for use in the composite fiber forming step, and other substances contained in the slurry in the composite fiber forming step.

<Inorganic-particle-combined fiber B>

The scope of the present invention also encompasses inorganic-particle-combined fiber B that is produced by the method B of producing inorganic-particle-combined fiber in accordance with the present invention. Inorganic-particle-combined fiber composed of nonpolar chemical fiber and inorganic particles is not simple fiber in which the nonpolar chemical fiber and inorganic particles are present merely in a mixed manner, but a composite of the nonpolar chemical fiber and inorganic particles which are bonded together by, for example, hydrogen bonds. Therefore, the inorganic particles are less likely to fall off the nonpolar chemical fiber. Such composite fiber is high in yield of inorganic particles and is less prone to powdering off despite its high ash content, and thus is suitable for use in various applications.

The inorganic-particle-combined fiber produced by the method B of producing inorganic-particle-combined fiber in accordance with an aspect of the present invention can be high-ash-content composite fiber comprised of nonpolar chemical fiber, which could not have been achieved by conventional methods.

For example, the inorganic-particle-combined fiber B produced in an aspect of the present invention can be inorganic-particle-combined fiber comprised of nonpolar chemical fiber in which the ash content (% by weight) is not less than 5% by weight, even not less than 10% by weight.

Furthermore, the inorganic-particle-combined fiber produced by the method B of producing inorganic-particle-combined fiber in accordance with an aspect of the present invention can be high-coverage composite fiber comprised of nonpolar chemical fiber, which could not have been achieved by conventional methods. For example, the inorganic-particle-combined fiber B produced in an aspect of the present invention can be inorganic-particle-combined fiber comprised of nonpolar chemical fiber in which the extent of covering of fiber surface by inorganic particles (such an extent of covering is referred to as coverage, which is expressed in area percentage) (% by area) is not less than 15% by area, even not less than 20% by area.

Moreover, the inorganic-particle-combined fiber B produced by the method B of producing inorganic-particle-combined fiber in accordance with an aspect of the present invention has a greater proportion of its fiber surface covered with inorganic particles. Such inorganic-particle-combined fiber achieves higher yield when made into a sheet. This in turn makes it possible to improve the speed of sheet production (e.g., wire speed of paper machine).

In a preferred aspect, the inorganic-particle-combined fiber B is composite fiber composed of (i) inorganic particles and (ii) nonpolar chemical fiber that has a Canadian standard freeness (in accordance with JIS P 8121:1995) of not less than 10 mL and not more than 835 mL.

In a preferred aspect, the inorganic-particle-combined fiber B is comprised of at least one nonpolar chemical fiber selected from the group consisting of polyolefin fiber, polypropylene fiber, polyethylene fiber, and synthetic fibers each containing a partial structure of polyolefin. The "polyolefin" as in the "synthetic fibers each containing a partial structure of polyolefin" is not particularly limited, and may be, for example, polyethylene or polypropylene.

The scope of the present invention also encompasses the articles including the inorganic-particle-combined fiber B produced by the method B of producing inorganic-particle-combined fiber in accordance with an aspect of the present invention. The scope of the present invention also encompasses use of the inorganic-particle-combined fiber B for production of such an article.

Note that the descriptions in the <Method A of producing inorganic-particle-combined fiber> section are applied *mutatis mutandis* to applications of the inorganic-particle-combined fiber B produced by the method B of producing inorganic-particle-combined fiber.

[Recap]

The present invention encompasses, but is not limited to, the following subject matters.

(1) A method of producing inorganic-particle-combined fiber, the method including: a beating step including beating chemical fiber in a wet manner or a dry manner; and a composite fiber forming step including forming inorganic-particle-combined fiber which is composite fiber composed of the chemical fiber and inorganic particles, the composite fiber forming step including synthesizing the inorganic particles in a slurry that contains the chemical fiber after the beating step.

(2) The method described in (1), in which the chemical fiber is polar chemical fiber.

(3) The method described in (2), in which the inorganic-particle-combined fiber is composite fiber which is composed of (i) the inorganic particles and (ii) the chemical fiber which has a Canadian standard freeness of not less than 10 mL and not more than 760 mL, the Canadian standard freeness being measured in accordance with JIS P 8121:1995.

(4) The method described in (2) or (3), in which the beating step includes beating the chemical fiber so that a difference ΔCSF, calculated using Equation (A-1) below, is not less than 5 mL:

$$\Delta \text{CSF (mL)} = \text{Canadian standard freeness of the polar chemical fiber before the beating step}$$
$$- \text{Canadian standard freeness of the polar chemical fiber after the beating step} \dots \text{(A-1)},$$

where the Canadian standard freeness is measured in accordance with JIS P 8121:1995.

(5) The method described in any one of (2) to (4), wherein the chemical fiber is at least one selected from the group consisting of regenerated cellulose fiber, polyester fiber, polyamide fiber, and acrylic fiber.

(6) The method described in (1), in which the chemical fiber is nonpolar chemical fiber.

(7) The method described in (6), in which the inorganic-particle-combined fiber is composite fiber which is composed of (i) the inorganic particles and (ii) the chemical fiber which has a Canadian standard freeness of not less than 10 mL and not more than 835 mL, the Canadian standard freeness being measured in accordance with JIS P 8121:1995.

(8) The method described in (6) or (7), in which the beating step includes beating the chemical fiber so that a difference ΔCSF, calculated using Equation (B-1) below, is not less than 5 mL:

$$\Delta CSF \text{ (mL)} = \text{Canadian standard freeness of the nonpolar chemical fiber before the beating}$$

$$\text{step - Canadian standard freeness of the nonpolar chemical fiber after the beating step ... (B-1),}$$

where the Canadian standard freeness is measured in accordance with JIS P 8121:1995.

(9) The method described in any one of (6) to (8), in which the chemical fiber is at least one selected from the group consisting of polyolefin fiber, polypropylene fiber, polyethylene fiber, and synthetic fibers each containing a partial structure of polyolefin.

(10) The method described in any one of (1) to (9), wherein at least some of the inorganic particles contain at least one selected from the group consisting of calcium, silicic acid, magnesium, barium, aluminum, titanium, copper, silver, zinc, platinum, iron, palladium, and zirconium.

(11) The method described in any one of (1) to (10), in which the inorganic particles of the inorganic-particle-combined fiber have an average primary particle diameter of not more than 5 $\mu$m.

(12) The method described in any one of (1) to (11), in which not less than 15% by area of a surface of the chemical fiber of the inorganic-particle-combined fiber is covered with the inorganic particles.

(13) The method described in any one of (1) to (12), in which a weight ratio between the chemical fiber and the inorganic particles of the inorganic-particle-combined fiber is 5/95 to 95/5.

(14) The method described in any one of (1) to (13), in which: the composite fiber forming step includes allowing two or more source materials to react with each other to synthesize the inorganic particles; and the beating step includes beating the chemical fiber in the presence of at least one of the two or more source materials which are for use in synthesizing the inorganic particles in the composite fiber forming step.

(15) Inorganic-particle-combined fiber including: inorganic particles; and polar chemical fiber which has a Canadian standard freeness of not less than 10 mL and not more than 760 mL, the Canadian standard freeness being measured in accordance with JIS P 8121:1995.

(16) The inorganic-particle-combined fiber described in (15), in which the chemical fiber is at least one selected from the group consisting of regenerated cellulose fiber, polyester fiber, polyamide fiber, and acrylic fiber.

(17) Inorganic-particle-combined fiber including: inorganic particles; and nonpolar chemical fiber which has a Canadian standard freeness of not less than 10 mL and not more than 835 mL, the Canadian standard freeness being measured in accordance with JIS P 8121:1995.

(18) The inorganic-particle-combined fiber described in (17), in which the chemical fiber is at least one selected from the group consisting of polyolefin fiber, polypropylene fiber, polyethylene fiber, and synthetic fibers each containing a partial structure of polyolefin.

(19) The inorganic-particle-combined fiber described in any one of (15) to (18), in which at least some of the inorganic particles contain at least one selected from the group consisting of calcium, silicic acid, magnesium, barium, aluminum, titanium, copper, silver, zinc, platinum, iron, palladium, and zirconium.

(20) The inorganic-particle-combined fiber as set forth in any one of (15) to (19), in which the inorganic particles of the inorganic-particle-combined fiber have an average primary particle diameter of not more than 5 $\mu$m.

(21) The inorganic-particle-combined fiber described in any one of (15) to (20), in which not less than 15% by area of a surface of the chemical fiber is covered with the inorganic particles.

(22) The inorganic-particle-combined fiber as set forth in any one of (15) to (21), in which a weight ratio between the chemical fiber and the inorganic particles is 5/95 to 95/5.

The present invention is not limited to the embodiments, but can be altered by a skilled person in the art within the scope of the claims. The present invention also encompasses, in its technical scope, any embodiment derived by combining technical means disclosed in differing embodiments.

Examples

The following description will more specifically discuss the present invention based on Examples. Note, however, that the present invention is not limited to these Examples.

[Example A-1: Synthesis of composite fiber composed of barium sulfate and polar chemical fiber]

Lyocell (registered trademark) (available from LENZING, fiber length: 4 mm) was used as polar chemical fiber. A slurry containing lyocell (registered trademark) (fiber concentration of the slurry: 1% by weight, solid content of the slurry: 200 g), and barium hydroxide octahydrate (Wako Pure Chemical Industries, Ltd., 368 g), were subjected to a Niagara beater (available from KUMAGAI RIKI KOGYO Co., Ltd.), and thereby the lyocell (registered trademark) was beaten at room temperature for about 10 minutes in the presence of barium hydroxide.

After the beating, the Canadian standard freeness (CSF) of the lyocell (registered trademark) was measured in accordance with JIS P 8121:1995, and found to be 748 mL. In contrast, the CSF of unbeaten lyocell (registered trademark) was 769 mL. The difference ΔCSF, found by subtracting the CSF of beaten lyocell (registered trademark) from the CSF of unbeaten lyocell (registered trademark), was 21 mL.

The fiber shape was observed under a laser microscope. As shown in Fig. 1, the fiber before the beating was in the form of linear strands ((a) of Fig. 1), whereas the fiber after the beating was in the form of short pieces which are bent in places. It was also confirmed that there are many external fibrils ((b) of Fig. 1).

The slurry after the beating, in an amount of 500 g, was transferred to a one-liter plastic cup. Sulfuric acid (Wako Pure Chemical Industries, Ltd., 5% aqueous solution) was added dropwise at 1.2 g/min with stirring using a three-one motor at 600 rpm until a pH of 7 was reached (pH before the dropping of sulfuric acid was 12.8). After the dropping, the stirring was continued for another 30 minutes, thereby obtaining a slurry of composite fiber of Example A-1. In this manner, composite fiber composed of barium sulfate and lyocell (registered trademark) is synthesized in Example A-1.

[Example A-2: Synthesis of composite fiber composed of barium sulfate and polar chemical fiber]

The same process as described in Example A-1 was carried out, except that polyester fiber (EP043, available from KURARAY CO., LTD.) was used as the polar chemical fiber. In this way, a slurry of composite fiber of Example A-2 was obtained.

After the beating, the CSF of the polyester fiber was measured, and found to be 752 mL. In contrast, the CSF of unbeaten polyester fiber was 773 mL. The difference ΔCSF, found by subtracting the CSF of beaten polyester fiber from the CSF of unbeaten polyester fiber, was 21 mL.

The fiber shape was observed under a laser microscope. As a result, in was confirmed that, as shown in Fig. 2, the fiber was in the form of linear strands before the beating ((a) of Fig. 2), whereas the fiber after the beating was bent or crushed in places ((b) of Fig. 2). There were no fibrils in the slurry of the polyester fiber after the beating. A cause of the low CSF of the beaten fiber is inferred to be that the beating softened the structure of the fiber and improved the water retaining capacity of the fiber. Another cause is inferred, from the laser microscope observation in which the fiber shape was found to have changed from linear strands to bent strands, to be that such a change in fiber shape caused more entanglement of strands of fiber and resulted in an increase in freeness.

[Example A-3: Synthesis of composite fiber composed of barium sulfate and polar chemical fiber]

No barium hydroxide was added when polyester fiber was beaten. After the beating, the polyester fiber (500 g) was transferred to a reaction vessel, barium hydroxide octahydrate (Wako Pure Chemical Industries, Ltd., 9.2 g) was added to the vessel, and stirred using a three-one motor (600 rpm) for 30 minutes. The subsequent operations were the same as described in Example A-2. In this way, a slurry of composite fiber of Example A-3 was obtained.

[Comparative Example A-1: Synthesis of composite fiber composed of barium sulfate and polar chemical fiber]

The same process as described in Example A-1 was carried out, except that lyocell (registered trademark) was not beaten. In this way, a slurry of composite fiber of Comparative Example A-1 was obtained.

[Comparative Example A-2: Synthesis of composite fiber composed of barium sulfate and polar chemical fiber]

The same process as described in Example A-2 was carried out, except that polyester fiber was not beaten. In this way, a slurry of composite fiber of Comparative Example A-2 was obtained.

<<Evaluation of composite fiber>>

Each of the obtained composite fibers was washed with ethanol, and the surface of the composite fiber was observed under a scanning electron microscope (SEM). The results are shown in Figs. 3 to 5. Fig. 3 show micrographs of the composite fibers prepared in Example A-1 and Comparative Example A-1 observed under a scanning electron microscope. Fig. 4 shows micrographs of the composite fibers prepared in Example A-2 and Comparative Example A-2 observed under a scanning electron microscope. (a) of Fig. 3 and (a) of Fig. 4 each show composite fiber of a Comparative Example observed at a magnification of 3000×. (b) of Fig. 3 and (b) of Fig. 4 each show composite fiber of a Comparative Example observed at a magnification of 10000×. (c) of Fig. 3 and (c) of Fig. 4 each show composite fiber of an Example observed at a magnification of 3000×. (d) of Fig. 3 and (d) of Fig. 4 each show composite fiber of an Example observed at a magnification of 10000×.

Fig. 5 shows micrographs of the composite fiber prepared in Example A-3 observed under a scanning electron microscope, (a) of Fig. 5 shows the composite fiber of Example A-3 observed at a magnification of 3000×. (b) of Fig. 5 shows the composite fiber of Example A-3 observed at a magnification of 10000×.

<<Result A-1: Example A-1 and Comparative Example A-1>>

As is apparent from Fig. 3, the observation showed that the fibers of the composite fibers of Example A-1 and Comparative Example A-1 both have their surfaces covered with an inorganic substance and that the inorganic substance is self-assembled to the fiber. Many of the inorganic particles fixed to the fiber were in the form of plates, and those which are small in size were observed as irregular-shaped particles. The primary particle diameter of the inorganic particles, determined based on the observation, was 50 to 300 nm, and the average primary particle diameter was about 150 nm. The composite fiber of Example A-1 was found to have an increased amount of fibrils which resulted from the beating, as compared to the composite fiber of Comparative Example A-1.

Each of the obtained composite fibers was measured for the extent of covering of lyocell (registered trademark) by inorganic particles (i.e., such an extent of covering is referred to as coverage, which is expressed in area percentage) by SEM observation. As a result, the coverage of the composite fiber of Example A-1 was 20% by area. On the contrary, the coverage of the composite fiber of Comparative Example A-1 was 15% by area.

Each of the obtained composite fibers was measured for the weight ratio between fiber and inorganic particles. The weight ratio (ash content) was determined in the following manner using a dynamic drainage analyzer (DDA, available from Ab Akribi Kemikonsulter). The composite fiber slurry (solid content: 0.5 g) was stirred at 800 rpm, forced to dehydrate at a pressure of 0.3 bar and thereby formed into a sheet, the resultant residue was dried in an oven (at 105°C for 2 hours), and then the organic component was burnt at 525°C. The weight ratio (ash content) was calculated from the weights before and after the burning. As a result, the weight ratio between fiber and inorganic particles of the composite fiber of Example A-1 was 86:14 (ash content: 14% by weight). On the contrary, the weight ratio between fiber and inorganic particles of the composite fiber of Comparative Example A-1 was 91:9 (ash content: 9% by weight).

The above results show that, when lyocell (registered trademark) that has undergone the beating step is used in synthesis of composite fiber, it is possible to produce composite fiber with more inorganic particles attached thereto than in a case where lyocell (registered trademark) that has not undergone the beating step is used in synthesis of composite fiber

<<Result A-2: Example A-2 and Comparative Example A-2>>

As is apparent from Fig. 4, the observation showed that the fibers of the composite fibers of Example A-2 and Comparative Example A-2 both have their surfaces covered with an inorganic substance and that the inorganic substance is self-assembled to the fiber. Many of the inorganic particles fixed to the fiber were in the form of plates, and those which are small in size were observed as irregular-shaped particles. The primary particle diameter of the inorganic particles, determined based on the observation, was 50 to 300 nm, and the average primary particle diameter was about 150 nm. With regard to the composite fiber of Example A-2, there was no beating-induced increase in amount of fibrils, as compared to the composite fiber of Comparative Example A-2.

Each of the obtained composite fibers was measured for the extent of covering of fiber surface by inorganic particles (such an extent of covering is referred to as coverage, expressed in area percentage). As a result, the coverage of the composite fiber of Example A-2 was 85% by area. On the contrary, the coverage of the composite fiber of Comparative Example A-2 was 10% by area.

The weight ratio between fiber and inorganic particles of the composite fiber of Example A-2 was 91:9 (ash content: 9% by weight). On the contrary, the weight ratio between fiber and inorganic particles of the composite fiber of Comparative Example A-2 was 96:4 (ash content: 4% by weight).

The above results show that, when polyester fiber that has undergone the beating step is used in synthesis of composite fiber, it is possible to produce composite fiber with more inorganic particles attached thereto than in a case where polyester fiber that has not undergone the beating step is used in synthesis of composite fiber.

<<Result A-3: Example A-3>>

As is apparent from Fig. 5, the observation showed that the fiber of the composite fiber of Example A-3 has its surface covered with an inorganic substance and that the inorganic substance is self-assembled to the fiber. Many of the inorganic particles fixed to the fiber were in the form of plates, and those which are small in size were observed as irregular-shaped particles. The primary particle diameter of the inorganic particles, determined based on the observation, was 50 to 300 nm, and the average primary particle diameter was 150 nm.

The extent of covering of fiber surface by inorganic particles (such an extent of covering is referred to as coverage, expressed in area percentage) of the composite fiber of Example A-3 was 75% by area. The weight ratio between fiber and inorganic particles of the composite fiber of Example A-3 was 95:6 (ash content: 6% by weight).

The above results show that, also in a case where composite fiber is synthesized after beating the polyester fiber in the absence of barium hydroxide, it is also possible to produce composite fiber with more inorganic particles attached thereto than in a case where polyester fiber that has not undergone the beating step is used in synthesis of composite fiber (Comparative Example A-2).

[Example B-1: Synthesis of composite fiber composed of barium sulfate and nonpolar chemical fiber]

Polypropylene fiber (available from Toabo Material Co., Ltd., fiber length: 6 mm) was used as nonpolar chemical fiber. A slurry containing polypropylene fiber (fiber concentration of the slurry: 0.6% by weight, solid content of the slurry: 120 g) was subjected to a Niagara beater (available from KUMAGAI RIKI KOGYO Co., Ltd.), and was beaten at room temperature for about 10 minutes.

After the beating, the Canadian standard freeness (CSF) of the polypropylene fiber was measured in accordance with JIS P 8121:1995, and found to be 776 mL. In contrast, the CSF of unbeaten polypropylene fiber was 841 mL. The difference ∆CSF, found by subtracting the CSF of beaten polypropylene fiber from the CSF of unbeaten polypropylene fiber, was 65 mL.

The fiber shape was observed under a laser microscope. As a result, in was confirmed that, as shown in Fig. 6, the fiber was in the form of linear strands before the beating ((a) of Fig. 6), whereas the fiber after the beating was in the form of short pieces which are bent and crushed in places ((b) of Fig. 6). There were no fibrils in the slurry of the polypropylene fiber after the beating. A cause of the low CSF of the beaten fiber is inferred to be that the beating softened the structure of the fiber and improved the water retaining capacity of the fiber. Another cause is inferred, from the laser microscope observation in which the fiber shape was found to have changed from linear strands to bent strands, to be that such a change in fiber shape caused more entanglement of strands of fiber and resulted in an increase in freeness.

The slurry after the beating, in an amount of 830 mL, was transferred to a one-liter plastic cup. Barium hydroxide (9.2 g, Wako Pure Chemical Industries, Ltd.) was added to the cup, and then sulfuric acid (Wako Pure Chemical Industries, Ltd., 5% aqueous solution) was added dropwise at 1.2 g/min with stirring using a three-one motor at 600 rpm until a pH of 7 was reached (pH before the dropping of sulfuric acid was 12.8). After the dropping, the stirring was continued for another 30 minutes, thereby obtaining a slurry of composite fiber of Example B-1. In this manner, composite fiber composed of barium sulfate and polypropylene fiber is synthesized in Example B-1,

[Comparative Example B-1: Synthesis of composite fiber composed of barium sulfate and nonpolar chemical fiber]

The same process as described in Example B-1 was carried out, except that the polypropylene fiber was not beaten. In this way, a slurry of composite fiber of Comparative Example B-1 was obtained.

<<Evaluation of composite fiber>>

Each of the obtained composite fibers was washed with ethanol, and the surface of the composite fiber was observed under a scanning electron microscope (SEM). The results are shown in Fig. 7. (a) of Fig. 7 shows the composite fiber of Comparative Example B-1 observed at a magnification of 500×. (b) of Fig. 7 shows the composite fiber of Comparative Example B-1 observed at a magnification of 3000×. (c) of Fig. 7 shows the composite fiber of Comparative Example B-1 observed at a magnification of 10000x. (d) of Fig. 7 shows the composite fiber of Example B-1 observed at a magnification of 500×. (e) of Fig. 7 shows the composite fiber of Example B-1 observed at a magnification of 3000×. (f) of Fig. 7 shows the composite fiber of Example B-1 observed at a magnification of 10000×.

<<Result B-1: Example B-1 and Comparative Example B-1>>

As is apparent from Fig. 7, the observation showed that the fibers of the composite fibers of Example B-1 and Comparative Example B-1 both have their surfaces covered with an inorganic substance and that the inorganic substance is self-assembled to the fiber. Many of the inorganic particles fixed to the fiber were observed as irregular-shaped particles. The primary particle diameter of the inorganic particles, determined based on the observation, was 50 to 300 nm, and the average primary particle diameter was about 150 nm. The composite fiber of Example B-1 was found to have surface asperities and delamination resulting from the beating, as compared to the composite fiber of Comparative Example B-1.

Each of the obtained composite fibers was measured for the extent of covering of polypropylene fiber by inorganic particles (such an extent is referred to as coverage, expressed in area percentage) by SEM observation. As a result, the coverage of the composite fiber of Example B-1 was 70% by area. On the contrary, the coverage of the composite fiber of Comparative Example B-1 was 10% by area.

Each of the obtained composite fibers was measured for the weight ratio between fiber and inorganic particles. The weight ratio (ash content) was determined in the following manner using a dynamic drainage analyzer (DDA, available from Ab Akribi Kemikonsulter). The composite fiber slurry (solid content: 0.5 g) was stirred at 800 rpm, forced to dehydrate at a pressure of 0.3 bar and thereby formed into a sheet, the resultant residue was dried in an oven (at 105°C for 2 hours), and then the organic component was burnt at 525°C. The weight ratio (ash content) was calculated from the weights before and after the burning. As a result, the weight ratio between fiber and inorganic particles of the composite fiber of Example B-1 was 90:10 (ash content: 10% by weight). On the contrary, the weight ratio between fiber and inorganic particles of the composite fiber of Comparative Example B-1 was 96:4 (ash content: 4% by weight).

The above results show that, when polypropylene fiber that has undergone the beating step is used in synthesis of composite fiber, it is possible to produce composite fiber with more inorganic particles attached thereto than in a case where polypropylene fiber that has not undergone the beating step is used in synthesis of composite fiber.

Industrial Applicability

According to a method of producing inorganic-particle-combined fiber in accordance with an aspect of the present invention, it is possible to produce fiber having a greater amount of inorganic matter attached thereto. Therefore, a method A of producing inorganic-particle-combined fiber and inorganic-particle-combined fiber A in an aspect of the present invention can be suitably used in various fields which use fibers (particularly polar chemical fibers such as regenerated cellulose fiber, polyester fiber, polyamide fiber, and acrylic fiber) with functions (such as flame resistance, anti-odor/antibacterial properties, and/or radiation shielding property) of inorganic particles imparted thereto. Furthermore, a method B of producing inorganic-particle-combined fiber and inorganic-particle-combined fiber B in an aspect of the present invention can be suitably used in various fields which use fibers (particularly polyolefin fiber, polypropylene fiber, polyethylene fiber) with functions (such as flame retardancy, deodorization/antibacterial property, radiation shielding property) of inorganic particles imparted thereto.

The features disclosed in this specification, the figures and / or the claims may be material for the realization of the invention in its various embodiments, taken in isolation or in various combinations thereof.

**Claims**

1. A method of producing inorganic-particle-combined fiber, the method comprising:

   a beating step comprising beating chemical fiber in a wet manner or a dry manner; and
   a composite fiber forming step comprising forming inorganic-particle-combined fiber which is composite fiber composed of the chemical fiber and inorganic particles, the composite fiber forming step comprising synthesizing the inorganic particles in a slurry that contains the chemical fiber after the beating step.

2. The method as set forth in claim 1, wherein the chemical fiber is polar chemical fiber.

3. The method as set forth in claim 2, wherein the inorganic-particle-combined fiber is composite fiber which is composed of (i) the inorganic particles and (ii) the chemical fiber which has a Canadian standard freeness of not less than 10 mL and not more than 760 mL, the Canadian standard freeness being measured in accordance with JIS P 8121:1995.

4. The method as set forth in claim 2 or 3, wherein the beating step comprises beating the chemical fiber so that a difference $\Delta$CSF, calculated using Equation (A-1) below, is not less than 5 mL:

$$\Delta\text{CSF (mL)} = \text{Canadian standard freeness of the polar chemical fiber before the beating step} - \text{Canadian standard freeness of the polar chemical fiber after the beating step} \ldots \text{(A-1)},$$

   where the Canadian standard freeness is measured in accordance with JIS P 8121:1995.

5. The method as set forth in any one of claims 2 to 4, wherein the chemical fiber is at least one selected from the group consisting of regenerated cellulose fiber, polyester fiber, polyamide fiber, and acrylic fiber.

**6.** The method as set forth in claim 1, wherein the chemical fiber is nonpolar chemical fiber.

**7.** The method as set forth in claim 6, wherein the inorganic-particle-combined fiber is composite fiber which is composed of (i) the inorganic particles and (ii) the chemical fiber which has a Canadian standard freeness of not less than 10 mL and not more than 835 mL, the Canadian standard freeness being measured in accordance with JIS P 8121:1995.

**8.** The method as set forth in claim 6 or 7, wherein the beating step comprises beating the chemical fiber so that a difference ΔCSF, calculated using Equation (B-1) below, is not less than 5 mL:

$$\Delta CSF \text{ (mL)} = \text{Canadian standard freeness of the nonpolar chemical fiber before the beating step - Canadian standard freeness of the nonpolar chemical fiber after the beating step ... (B-1),}$$

where the Canadian standard freeness is measured in accordance with JIS P 8121:1995.

**9.** The method as set forth in any one of claims 6 to 8, wherein the chemical fiber is at least one selected from the group consisting of polyolefin fiber, polypropylene fiber, polyethylene fiber, and synthetic fibers each containing a partial structure of polyolefin.

**10.** The method as set forth in any one of claims 1 to 9, wherein at least some of the inorganic particles contain at least one selected from the group consisting of calcium, silicic acid, magnesium, barium, aluminum, titanium, copper, silver, zinc, platinum, iron, palladium, and zirconium.

**11.** The method as set forth in any one of claims 1 to 10, wherein the inorganic particles of the inorganic-particle-combined fiber have an average primary particle diameter of not more than 5 μm.

**12.** The method as set forth in any one of claims 1 to 11, wherein not less than 15% by area of a surface of the chemical fiber of the inorganic-particle-combined fiber is covered with the inorganic particles.

**13.** The method as set forth in any one of claims 1 to 12, wherein a weight ratio between the chemical fiber and the inorganic particles of the inorganic-particle-combined fiber is 5/95 to 95/5.

**14.** The method as set forth in any one of claims 1 to 13, wherein:

the composite fiber forming step comprises allowing two or more source materials to react with each other to synthesize the inorganic particles; and
the beating step comprises beating the chemical fiber in the presence of at least one of the two or more source materials which are for use in synthesizing the inorganic particles in the composite fiber forming step.

**15.** Inorganic-particle-combined fiber comprising: inorganic particles; and polar chemical fiber which has a Canadian standard freeness of not less than 10 mL and not more than 760 mL, the Canadian standard freeness being measured in accordance with JIS P 8121:1995.

**16.** The inorganic-particle-combined fiber as set forth in claim 15, wherein the chemical fiber is at least one selected from the group consisting of regenerated cellulose fiber, polyester fiber, polyamide fiber, and acrylic fiber.

**17.** Inorganic-particle-combined fiber comprising: inorganic particles; and nonpolar chemical fiber which has a Canadian standard freeness of not less than 10 mL and not more than 835 mL, the Canadian standard freeness being measured in accordance with JIS P 8121:1995.

**18.** The inorganic-particle-combined fiber as set forth in claim 17, wherein the chemical fiber is at least one selected from the group consisting of polyolefin fiber, polypropylene fiber, polyethylene fiber, and synthetic fibers each containing a partial structure of polyolefin.

**19.** The inorganic-particle-combined fiber as set forth in any one of claims 15 to 18, wherein at least some of the inorganic particles contain at least one selected from the group consisting of calcium, silicic acid, magnesium, barium, aluminum, titanium, copper, silver, zinc, platinum, iron, palladium, and zirconium.

20. The inorganic-particie-combined fiber as set forth in any one of claims 15 to 19, wherein the inorganic particles of the inorganic-particie-combined fiber have an average primary particle diameter of not more than 5 $\mu$m.

21. The inorganic-particle-combined fiber as set forth in any one of claims 15 to 20, wherein not less than 15% by area of a surface of the chemical fiber is covered with the inorganic particles.

22. The inorganic-particle-combined fiber as set forth in any one of claims 15 to 21, wherein a weight ratio between the chemical fiber and the inorganic particles is 5/95 to 95/5

(a)
Scan mode XYZ High speed + Color
Image size [pixel] 1024×1024
Image size [μm] 2560×2571
Objective lens MPLFLN5
Zoom 1X

(b)
Scan mode XYZ High speed + Color
Image size [pixel] 1024×1024
Image size [μm] 2560×2571
Objective lens MPLFLN5
Zoom 1X

Fig. 1

(a)
Scan mode XYZ High speed + Color
Image size [pixel] 1024×1024
Image size [μm] 2560×2571
Objective lens MPLFLN5
Zoom 1X

(b)
Scan mode XYZ High speed + Color
Image size [pixel] 1024×1024
Image size [μm] 2560×2571
Objective lens MPLFLN5
Zoom 1X

Fig. 2

(a)

(b)

(c)

(d)

Fig. 3

(a)

(b)

(c)

(d)

Fig. 4

(a) (b)

Fig. 5

24

(a)

Scan mode XYZ High speed + Color
Image size [pixel] 1024×1024
Image size [μm] 2560×2571
Objective lens MPLFLN5
Zoom 1X

(b)

Scan mode XYZ High speed + Color
Image size [pixel] 1024×1024
Image size [μm] 2560×2571
Objective lens MPLFLN5
Zoom 1X

Fig. 6

Fig. 7

## INTERNATIONAL SEARCH REPORT

| International application No. |
| --- |
| PCT/JP2018/015893 |

### A. CLASSIFICATION OF SUBJECT MATTER

Int.Cl. D06M11/56(2006.01)i, C01F11/46(2006.01)i, D21H17/69(2006.01)i

According to International Patent Classification (IPC) or to both national classification and IPC

### B. FIELDS SEARCHED

Minimum documentation searched (classification system followed by classification symbols)
Int.Cl. D06M11/56, C01F11/46, D21H17/69

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 6-158585 A (AUSSEDAT, Rey) 07 June 1994, claims, fig. 20-22, paragraph [0018] & US 5731080 A, claims, fig. 20-22, columns 6-7 & GB 2265916 A & DE 4311505 A & FR 2689530 A & CH 686963 A & PT 101250 A & IT 1260643 A & CA 2093545 A & DK 41793 A & ES 2100781 A & FI 931584 A & NL 9300612 A & NO 931326 A & SE 9301169 A | 1-22 |

☒ Further documents are listed in the continuation of Box C.    ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 06 July 2018 (06.07.2018) | 17 July 2018 (17.07.2018) |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |
| --- | --- |

Form PCT/ISA/210 (second sheet) (January 2015)

**INTERNATIONAL SEARCH REPORT**

| International application No. |
| --- |
| PCT/JP2018/015893 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2004-502048 A (INTERNATIONAL PAPER COMPANY) 22 January 2004, claims, fig. 1, paragraphs [0024], [0025] & US 2002/0096272 A1, claims, fig. 1, paragraphs [0025], [0026] & WO 2002/000999 A1 & EP 1297220 A1 & AU 7142401 A & CA 2413709 A | 1-22 |
| X | JP 2015-199655 A (NIPPON PAPER INDUSTRIES CO., LTD.) 12 November 2015, claims, fig. 1, paragraphs [0054], [0055] & JP 2015-199658 A & JP 2015-199660 A & US 2017/0107668 A1 & US 2017/0113945 A1, claims, fig. 1, paragraph [0042] & WO 2015/152269 A1 & WO 2015/152283 A1 & WO 2015/152269 A1 & EP 3127867 A1 & EP 3127868 A1 & TW 201542902 A & TW 201609545 A & CA 2943930 A & CA 2944320 A | 1-22 |
| A | 紙パルプ技術協会 編, 紙パルプの試験法, 紙パルプ技術協会, 1995, pp. 66, 67, 70, (Japan Tappi), non-official translation (Japan Tappi Edition, "Test method for paper pulp") | 1-22 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015199655 A